# EUROPÄISCHE PATENTSCHRIFT

(11) **EP 1 937 432 B1**
(45) Veröffentlichungstag und Bekanntmachung des Hinweises auf die Patenterteilung: **23.03.2011**
(21) Anmeldenummer: 06807332.9
(22) Anmeldetag: 17.10.2006
(51) Int. Cl.: B22F 3/105

(54) **VERFAHREN ZUR HERSTELLUNG EINES ZAHNERSATZTEILS**
METHOD FOR PRODUCING A DENTURE
PROCEDE POUR PRODUIRE UNE PROTHESE DENTAIRE

(30) Priorität: 17.10.2005 DE 102005049886; 15.12.2005 US 750381 P
(43) Veröffentlichungstag der Anmeldung: 02.07.2008
(73) Patentinhaber: Sirona Dental Systems GmbH, 64625 Bensheim (DE)
(72) Erfinder: SCHMIDT, Christian, 64625 Bensheim (DE); KOTILA, Juha, 20540 Turku (FI)
(74) Vertreter: Sommer, Peter
(86) Internationale Anmeldenummer: PCT/EP2006/067481
(87) Internationale Veröffentlichungsnummer: WO 2007/045643

(56) Entgegenhaltungen:
- WO-A-03/026714
- DE-A1- 10 320 085
- US-A1- 2005 056 350
- US-A1- 2005 123 672

## Beschreibung

### Technisches Gebiet

Die Erfindung betrifft ein Verfahren zur Herstellung eines Zahnersatzteils mittels lokalem Sintern, wobei das Zahnersatzteil schichtweise durch Energieeintrag mittels eines energietransportierenden Strahls in einzelne Pulverschichten aus einem sinterfähigen Material hergestellt wird.

### Stand der Technik

Im Stand der Technik sind Verfahren zur Herstellung von individuellen Zahnersatzteilen bekannt, die von den Prinzipien des Rapid Prototyping Gebrauch machen.

Ein solches Verfahren, mit dem Zahnersatzteile aus metallischen Werkstoffen hergestellt werden, ist das direkte Metall-Laser-Sintern (DMLS) bzw. das Selektive Laser Schmelzen (SLM). Der zu verarbeitende Werkstoff liegt dabei meist in Pulverform vor, wobei der Werkstoff auf einer Unterlage oder in einer Schale in gleichmäßiger Dicke verteilt ist.

Der Energieeintrag des Lasers bewirkt eine starke lokale Temperaturerhöhung des Pulvers und dadurch ein Schmelzen bzw. Sintern der Metallpartikel. Durch das Schmelzen bzw. Sintern des Pulvers entsteht ein stofflicher Zusammenhalt der bereits belichteten Flächen. Sobald eine Schicht fertig gestellt ist, wird eine neue Pulverschicht aufgetragen und die nächste Schicht belichtet.

Bei diesem Verfahren werden ganz allgemein immer volumenhafte CAD-Konstruktionsdaten in einzelne Schichten zerlegt, die üblicherweise 20 bis 50 µm dick sind.

Die EP 1 358 855 A1 offenbart ein solches Verfahren. Metallische oder auch nicht-metallische Produkte werden durch Freiform-Lasersintern hergestellt, wobei die Produkte mittels eines datengesteuert geführten Laserstrahls aus pulverförmigem Werkstoff auf einer Substratplatte schichtweise senkrecht aufgebaut werden. Zwischen der Substratplatte und den Produkten wird ein Steg mit einer Sollbruchstelle vorgesehen. Dieses Verfahren hat jedoch den Nachteil, dass es, wie sich in der Praxis zeigt, nicht auf alle Arten herzustellender Zahnersatzteile anwendbar ist und dass das so hergestellte Zahnersatzteil nachbearbeitet werden muss, um Unebenheiten an der Sollbruchstelle zu beseitigen.

Aus der DE 103 20 085 A1 ist ein Verfahren zum Herstellen von Produkten durch Freiform-Lasersintern oder -schmelzen bekannt, wobei zur Beschleunigung des Herstellungsvorgangs zunächst in einem geschlossenen Randbereich jede Schicht einzeln verdichtet wird und anschließend der zunächst pulverförmig gebliebene innere Kernbereich umfassend mehrere Schichten für diese Schichten insgesamt, mit entsprechend höherer Strahlleistung, gesintert bzw. aufgeschmolzen und auf diese Weise verdichtet wird.

Die WO 03/026714 A1 offenbart einen porösen keramischen Knochenersatz, der durch Sintern aus einem Pulver aus Polymeren und Keramik hergestellt wird, wobei die Keramikdichte des Knochenersatzes vorteilhafterweise 25% des Volumens oder 17% des Volumens beträgt und wobei selektives Laser-Sintern zur Herstellung des porösen, keramischen Knochenersatzes verwendet werden kann.

Es ist allgemein im Stand der Technik bekannt, ein Zahnersatzteil nach der Fertigstellung eines Kerns oder einer Gerüstkappe zur Erzeugung einer ansehnlichen Optik und einer guten Verträglichkeit mit dem umgebenden Gewebe mit Keramik oder Porzellan zu verblenden.

Auf Grund der oben genannten Probleme besteht die Aufgabe der Erfindung darin, ein Verfahren zur Herstellung von Zahnersatzteilen mittels lokalem Sintern anzugeben, das eine größere Vielfalt von herstellbaren Zahnersatzteilen ermöglicht.

### Offenbarung der Erfindung

Diese Aufgabe wird gelöst durch ein erfindungsgemäßes Verfahren gemäß den Merkmalen des unabhängigen Anspruchs 1. Erfindungsgemäß wird ein Verfahren zur Herstellung eines Zahnersatzteils mittels örtlichem Sintern vorgeschlagen, bei dem das Zahnersatzteil schichtweise und durch Energieeintrag mittels eines energietransportierenden Strahls in den einzelnen Pulverschichten aus einem sinterfähigen Materials hergestellt wird. Dabei werden ein oder mehrere Parameter des Sinterprozesses während der Herstellung so verändert, dass das Material räumlich verschieden stark gesintert wird, nämlich im Randbereich einer zu sinternden Schicht des herzustellenden Zahnersatzteils dichter als im Innenbereich der zu sinternden Schicht. Der Randbereich der zu sinternden Schicht wird zu einer Dichte von mehr als 95 % der theoretisch möglichen Dichte gesintert und der Innenbereich der zu sinternden Schicht wird mit einer Dichte zwischen 80 % und 95 % der theoretisch möglichen Dichte gesintert. Die Baurate im Randbereich liegt zwischen 1 mm³/s und 2,3 mm³/s und der Energieeintrag des Strahls je Flächeneinheit liegt zwischen 1,3 J/mm² und 8 J/mm². Die Baurate im Innenbereich liegt zwischen 2,3 mm³/s und 5 mm³/s und der Energieeintrag des Strahls liegt zwischen 0,5 J/mm² und 1,8 J/mm².

Brückengerüste und anatomisch geformte Vollkronen bzw. Vollzähne sind beispielhaft genannte Arten von Zahnersatzteilen, für die das erfindungsgemäße Verfahren anwendbar ist. Ein Brückengerüst besteht üblicherweise aus sehr dünnwandigen Brückenpfosten mit Wandstärken im Bereich von 0,3 bis 0,5 mm und im Vergleich dazu wesentlich voluminöseren Zwischengliedern und Verbindern. Die herzustellenden Elemente weisen somit Teilbereiche mit unterschiedlichen Dimensionen auf. In einzelne Schichten zerlegt bestehen die Brückenpfosten zum überwiegenden Teil aus ringförmigen Flächen und die Zwischenglieder sowie Verbinder aus vollen Flächen.

Problematisch ist dabei, dass die meist dünnen, ringförmigen Brückenpfosten nach dem Energieeintrag schneller abkühlen als die Zwischenglieder und Verbinder. Die Ringflächen nehmen wegen ihres geringeren Flächeninhalts eine geringere Wärmemenge auf als die vollflächigen Zwischenglieder und Verbinder. Außerdem steht den überwiegend ringförmigen Elementen zur Wärmeabgabe in das Pulverbett eine relativ größere Oberfläche zur Verfügung. Durch die durch das unterschiedlich schnelle Abkühlen bedingte Temperaturdifferenz innerhalb des Brückengerüsts werden thermische Spannungen aufgebaut, die besonders stark in den Übergangsbereichen zwischen den Brückenpfosten und den Zwischengliedern und Verbindern wirken. Dies kann in der Folge einerseits zum Ablösen der Brückenpfosten von den Befestigungselementen zur Bauplattform (Supportstrukturen) und andererseits zur Deformation des Brückengerüsts führen. Derart verformte Brückengerüste sind nicht weiter verwendbar und können während des Fertigungsprozesses zu Kollisionen mit der Beschichtungseinheit führen. Da meist mehrere Bauteile gleichzeitig in einem Fertigungsgang hergestellt werden, führt der unterbrochene Fertigungsablauf meist dazu, dass alle zu produzierenden Bauteile dieses Fertigungsganges unbrauchbar werden.

Der Versuch, diesem Problem durch eine verstärkte Anbindung der Brückenpfosten an die Bauplattform durch verstärkte Supportstrukturen zuvorzukommen, führte zu einem erheblichen Mehraufwand bei der Nachbearbeitung der Brückengerüste. Dies senkt die Wirtschaftlichkeit dieses Verfahrens erheblich.

Alternativ wurde versucht, den Sintergrad zu verringern. Der Sintergrad steht in diesem Zusammenhang für das Verhältnis von erreichter zu theoretische möglicher Dichte des gesinterten Guts. Bei Sintergraden von etwa 80-90% der theoretisch möglichen Dichte treten die oben genannten Probleme sehr viel seltener auf. Allerdings ist eine ordnungsgemäße Verblendung eines solch porösen Gerüsts sehr viel schwieriger, da aufgrund der offenen Poren im Randbereich Störungen wie Froschaugen, Abplatzungen o.ä. auftreten können, die das Zahnersatzteil unbrauchbar machen. Mit dem erfindungsgemäßen Verfahren ist es möglich, die genannten Probleme zu beheben.

Insbesondere weist ein erfindungsgemäß gefertigtes Zahnersatzteil einerseits eine ausreichende Festigkeit auf und der Ausschuss durch Verzug wird minimiert, andererseits existieren durch den hohen Sintergrad im Randbereich keine offenen Poren, wodurch eine fehlerfreie Verblendung herstellbar ist. Es lassen sich Zahnersatzteile mit hoher Qualität herstellen.

Vorteilhafterweise wird als energietransportierender Strahl ein Laserstrahl oder ein Elektronenstrahl verwendet. Die Eigenschaften dieser Strahlen sind wissenschaftlich untersucht und sind für die lokale Erhitzung eines Pulvers geeignet.

Vorteilhafterweise ist der Randbereich zwischen 0,1 und 1 mm breit. Besonders bevorzugt ist eine Breite des Randbereichs von höchstens 0,3 mm. Damit ist gewährleistet, dass sehr dünnwandige Elemente mit hoher Festigkeit hergestellt werden und dennoch der überwiegende Teil der Zahnersatzteile mit einer niedrigeren Dichte gesintert wird.

Vorteilhafterweise ist die Baurate, nämlich das Produkt aus der Dicke der Pulverschicht, der Bahnbreite des Strahls und der Belichtungsgeschwindigkeit, im Innenbereich größer als im Randbereich. Damit lässt sich eine räumlich verschieden starke Sinterung erreichen.

Vorteilhafterweise liegt der Energieeintrag des Strahls zwischen 0,5 J/mm² und 8 J/mm². Diese Energieeinträge sind mit herkömmlichen Energiestrahlen erreichbar.

Besonders vorteilhaft ist es, wenn die Zug- und Biegefestigkeit des Randbereichs größer als das 1,1-fache der Zug- und Biegefestigkeit des Innenbereichs. Damit wird eine ausreichende Formstabilität durch den festeren Randbereich gewährleistet.

Von besonderem Vorteil ist, wenn das Material ein Metall ist. Metalle lassen sich gut verarbeiten und weisen für die Verwendung als Brückenglieder oder anderen dentalen Restaurationen gute mechanische Eigenschaften auf, z.B. eine Zug- oder Biegefestigkeit oder ein hohes E-Modul.

### Kurze Beschreibung der Zeichnungen

Das erfindungsgemäße Verfahren wird anhand der nachfolgend genannten Zeichnungen erläutert. Es zeigen die
- Fig. 1: eine Lasersinteranlage, die
- Fig. 2: die Fertigung eines Brückengerüsts gemäß dem Stand der Technik und die
- Fig. 3: eine erfindungsgemäße Fertigung eines Brückengerüsts.

### Ausführungsform(en) der Erfindung

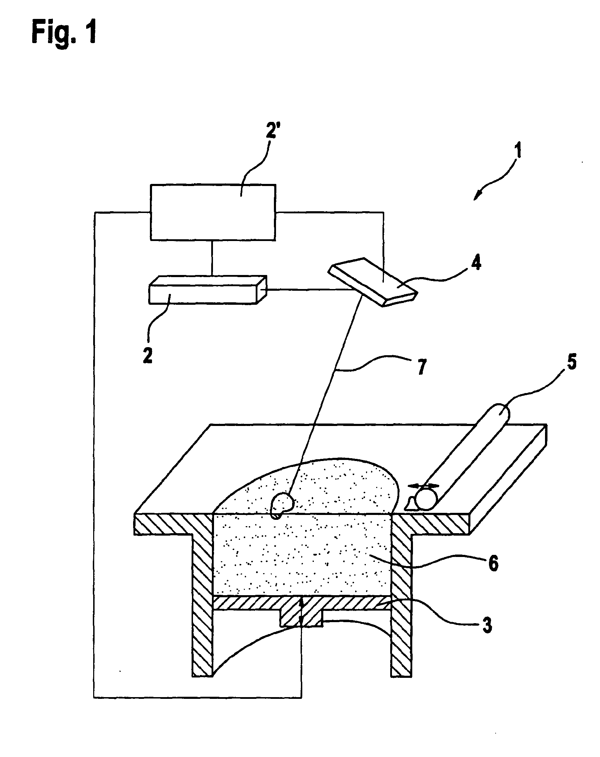

Die **Fig. 1** zeigt eine bekannte Lasersinteranlage 1 zur Durchführung des erfindungsgemäßen Verfahrens.

Die Lasersinteranlage 1 umfasst einen Laser 2, der von einer Steuereinheit 2' gesteuert wird, eine höhenverstellbare Trägerplattform 3, einen Umlenkspiegel 4 zur Führung des Laserstrahls 7 in der Ebene der Oberfläche des Pulvers 6 sowie eine Beschichtereinheit 5.

Die Steuereinheit 2' dient zum Steuern des Lasers 2, der Trägerplattform 3, des Umlenkspiegels 4 und der Beschichtereinheit 5. Die Steuereinheit 2' kann aus 3D-Volumendaten der Konstruktion Schichtdaten für herzustellende Schichten des Zahnersatzteils berechnen.

Der Laser 2 wird von der Steuereinheit 2' in seiner Intensität gesteuert.

Alternative Möglichkeiten, die Position des Laserstrahls 7 auf der Oberfläche des Pulvers 6 zu verändern, sind ebenfalls denkbar. Beispielsweise kann dies durch einen schwenk- und/oder verfahrbaren Laser oder eine Scaneinheit erreicht werden. Wichtig ist nur, dass der Laserstrahl 7 jeden Punkt der Oberfläche des Pulverbettes 6 erreicht, der innerhalb der Oberfläche des herzustellenden Zahnersatzteils liegt.

Die Beschichtereinheit 5 dient zum Auftragen einer neuen Pulverschicht nach dem Fertigstellen einer zu sinternden Schicht. Das Pulver 6 wird vom Laserstrahl 7, der vom Laser 2 erzeugt wird, belichtet.

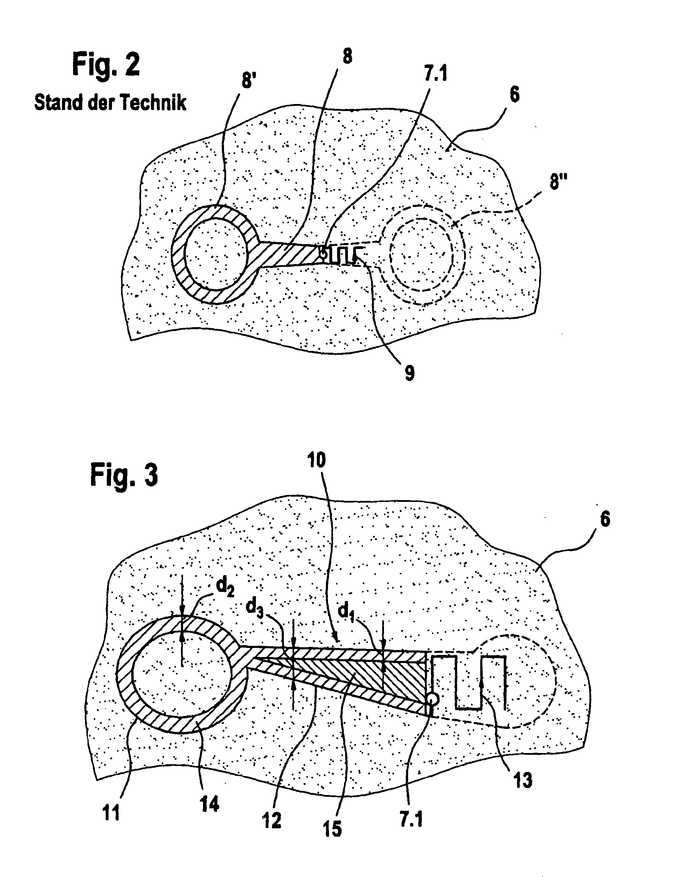

Die **Fig. 2** zeigt die Herstellung eines Brückengerüsts 8 durch Lasersintern gemäß dem Stand der Technik.

Der Laserstrahl 7 ist auf die Oberfläche des Pulvers 6 fokussiert. Die Konturen der herzustellenden Bauteilschicht 8' des Brückengerüsts 8 werden von einem Computer oder der Steuereinheit berechnet. Das CAD-Volumenmodell wird dazu in Schichten zerlegt. Aus diesen Schichten werden Bahndaten für die Relativbewegung zwischen Laser 7 und Trägerplattform 3 berechnet. Der Laserstrahl 7 fährt entlang des beispielhaft skizzierten Weges 9 auf Bahnen, deren Abstand kleiner ist als die Breite des Fokus 7.1 des Laserstrahls 7. Der noch unfertige Teil 8'' der Bauteilschicht 8' ist gestrichelt dargestellt.

Nach vollständiger Belichtung der Bauteilschicht 8' erfolgt der Auftrag einer neuen Pulverschicht, um die nächste Bauteilschicht zu belichten.

Erfindungsgemäß wird ein anderes Verfahren zur Herstellung eines Zahnersatzteils vorgeschlagen, das anhand der **Fig. 3** erläutert wird.

Das mittels Lasersintern herzustellende Brückengerüst 10 besteht aus einem Brückenpfosten 11 und einem Verbinder 12. Der Fokus 7.1 des Laserstrahls 7 wird, ähnlich wie in Fig. 2 dargestellt, auf Bahnen über das Pulverbett 6 geführt. Im Unterschied zu dem in Fig. 2 geschilderten Verfahren ist, dass der Energieeintrag pro Flächeneinheit bei diesem Verfahren lokal unterschiedlich ist.

Im Randbereich 14 des Brückengerüsts 10 werden die Prozessparameter so gewählt, dass der Sintergrad des Materials mindestens 99 % der theoretisch möglichen Dichte beträgt. Der Energieeintrag je Flächeneinheit, also die Laserleistung je Bahnbreite x Belichtungsgeschwindigkeit, beträgt im Randbereich 14 etwa 2 J/mm² bei einer Baurate von 2,08 mm³/s.

Im Innenbereich 15 des Brückengerüsts 10 wird die Baurate im Vergleich zum Randbereich 14 erhöht und die Laserleistung verringert, womit insgesamt auch der Energieeintrag je Flächeneinheit und damit auch der Sintergrad sinkt. Die Baurate im Innenbereich 15 beträgt 2,4 mm³/s und die Laserleistung 3500 W/mm². Der Sintergrad ist mit 90 % der theoretisch möglichen Dichte hoch genug, um die Anforderungen an die Belastbarkeit trotz der vorhandenen Restporosität zu erfüllen. Sintergrade von mehr als 80 % der theoretisch möglichen Dichte haben sich bei der Wahl von geeigneten Materialien als brauchbar erwiesen.

Die Breite d₁ des Randbereichs 14 beträgt idealerweise 0,3 mm. An Stellen, an denen die Breite des Brückengerüsts 10 weniger als die doppelte Breite, also 2 x 0,3 mm, beträgt, beispielsweise am Brückenpfosten 11 (die Wandstärke d₂ des Brückenpfostens 11 beträgt im Mittel etwa 0,4 - 0,5 mm), besteht der Abschnitt nur aus dichtgesintertem Material.

Erst bei einer Breite der Flächenelemente des Brückengerüsts 10 größer als 2 x d₁, wie beispielsweise an der 0,8 mm breiten Stelle d₃, existiert ein Innenbereich 15 mit geringerem Sintergrad. Die Brückenpfosten 11 und auch der Übergangsbereich zu den Verbindern sind damit üblicherweise fest gesintert und hoch belastbar.

Bevorzugte Materialien zur Anwendung des erfindungsgemäßen Verfahrens sind Kobalt-Chrom-Legierungen mit Anteilen von Wolfram und Molybdän. Vorzugsweise betragen die Massenanteile der Legierung Co > 60%; Cr > 25 %; W > 5 %; Mo > 5 %. Auch hochgoldhaltige Goldlegierungen und Titanlegierungen sind geeignet.

## Patentansprüche

1. Verfahren zur Herstellung eines Zahnersatzteils (10) mittels lokalem Sintern, wobei das Zahnersatzteil (10) schichtweise und durch Energieeintrag mittels eines energietransportierenden Strahls (7) in den einzelnen Pulverschichten aus einem sinterfähigen Materials (6) hergestellt wird, **dadurch gekennzeichnet, dass** ein oder mehrere Parameter des Sinterprozesses während der Herstellung so verändert werden, dass das Material (6) räumlich verschieden stark gesintert wird, nämlich im Randbereich (14) einer zu sinternden Schicht des herzustellenden Zahnersatzteils (10) dichter als im Innenbereich (15) der zu sinternden Schicht, wobei der Randbereich (14) der zu sinternden Schicht zu einer Dichte von mehr als 95% der theoretisch möglichen Dichte gesintert wird und wobei der Innenbereich (15) der zu sinternden Schicht zu einer Dichte zwischen 80% und 95% der theoretisch möglichen Dichte gesintert wird, wobei die Baurate im Randbereich (14) zwischen 1 mm³/s und 2,3 mm³/s und der Energieeintrag des Strahls (7) je Flächeneinheit zwischen 1,3 J/mm² und 8 J/mm² liegt und wobei die Baurate im Innenbereich (15) zwischen 2,3 mm³/s und 5 mm³/s und der Energieeintrag des Strahls (7) zwischen 0,5 J/mm² und 1,8 J/mm² liegt.

2. Verfahren nach Anspruch 1, **dadurch gekennzeichnet, dass** der energietransportierende Strahl ein Laserstrahl (7) oder ein Elektronenstrahl ist.

3. Verfahren nach Anspruch 1 oder 2, **dadurch gekennzeichnet, dass** das Zahnersatzteil (10) ein Brückengerüst oder eine anatomisch geformte Vollkrone bzw. ein anatomisch geformter Vollzahn ist.

4. Verfahren nach einem der Ansprüche 1 bis 3, **dadurch gekennzeichnet, dass** der Randbereich (14) zwischen 0,1 und 1 mm breit ist, vorzugsweise höchstens 0,4 mm.

5. Verfahren nach einem der Ansprüche 1 bis 4, **dadurch gekennzeichnet, dass** die Baurate, nämlich das Produkt aus der Dicke der Pulverschicht, der Bahnbreite des Strahls (7) und der Belichtungsgeschwindigkeit, im Innenbereich (15) größer als im Randbereich (14) ist.

6. Verfahren nach einem der Ansprüche 1 bis 5, **dadurch gekennzeichnet, dass** der Energieeintrag des Strahls (7) zwischen 0,5 J/mm² und 8 J/mm² liegt.

7. Verfahren nach einem der Ansprüche 1 bis 6, **dadurch gekennzeichnet, dass** die Zug- und Biegefestigkeit des Randbereichs (14) größer als das 1,1-fache der Zug- und Biegefestigkeit des Innenbereichs (15) ist.

8. Verfahren nach einem der Ansprüche 1 bis 7, **dadurch gekennzeichnet, dass** das Material (6) ein Metall ist.

## Claims

1. A process for the production of a dental prosthetic item (10) by means of local sintering, in which said dental prosthetic item (10) is produced layer-wise in the individual layers of powder of a sinterable material (6) by energy input by means of an energy transferring beam (7), **characterized in that** one or more parameters of the sintering process are modified during production such that the material (6) is regionally sintered to various degrees to produce denser material in the marginal region (14) of a sintered layer of said dental prosthetic item (10) than is produced in the inner region (15) of said sintered layer, said marginal area (14) of the layer to be sintered being sintered to a density of more than 95 % of the theoretically possible density and the inner region (15) of the layer to be sintered is sintered to a density of from 80 % to 95 % of the theoretically possible density, with the build-up rate in the marginal region (14) being from 1 mm³/s to 2.3 mm³/s and the energy input of the beam (7) per unit area being from 1.3 J/mm² to 8 J/mm², while the build-up rate in the inner region (15) is from 2.3 mm³/s to 5 mm³/s and the energy input of the beam (7) is from 0.5 J/mm² to 1.8 J/mm².

2. The process as defined in claim 1, **characterized in that** the energy transferring beam is a laser beam (7) or a beam of electrons.

3. The process as defined in claim 1 or claim 2, **characterized in that** the dental prosthetic item (10) is a bridge framework or an anatomically shaped solid crown or an anatomically shaped solid tooth.

4. The process as defined in any one of claims 1 to 3, **characterized in that** said marginal area (14) is from 0.1 to 1 mm wide, preferably not more than 0.4 mm.

5. The process as defined in any one of claims 1 to 4, **characterized in that** the build-up rate, namely the product of the thickness of the layer of powder, the path width of the ray (7) and the exposure rate, is greater in the inner region (15) than in the marginal region (14).

6. The process as defined in any one of claims 1 to 5, **characterized in that** the energy input of the beam (7) is from 0.5 J/mm² to 8 J/mm².

7. The process as defined in any one of claims 1 to 6, **characterized in that** the tensile strength and flexural strength of the marginal region (14) is greater than 1.1 times the tensile strength and flexural strength of the inner region (15).

8. The process as defined in any one of claims 1 to 7 **characterized in that** the material (6) is a metal.

## Revendications

1. Procédé de fabrication d'une pièce de remplacement de dent (10) au moyen d'un frittage locale, la pièce de remplacement de dent (10) étant fabriquée par couches et par apport d'énergie au moyen d'un rayon transportant l'énergie (7) dans les différentes couches poudreuses faites d'un matériau apte au frittage (6), **caractérisé en ce qu'**un ou plusieurs paramètres du procédé de frittage sont modifiés pendant la fabrication de manière à ce que le matériau (6) soit fritté à des épaisseurs différentes dans l'espace, à savoir plus épais dans la zone périphérique (14) d'une couche à fritter de la pièce de remplacement de dent (10) à fabriquer qu'à l'intérieur (15) de la couche à fritter, la zone périphérique (14) de la couche à fritter étant frittée à une épaisseur représentant plus de 95 % de l'épaisseur théorique possible et l'intérieur (15) de la zone à fritter étant fritté à une épaisseur comprise entre 80 % et 95 % de l'épaisseur théorique possible, la vitesse de constitution étant comprise dans la zone périphérique (14) entre 1 mm³/s et 2,3 mm³/s et l'apport énergétique du rayon (7) par unité surfacique étant compris entre 1,3 J/mm² et 8 J/mm² et la vitesse de constitution dans l'intérieur (15) étant comprise entre 2,3m m³/s et 5 mm³/s et l'apport énergétique du rayon (7) entre 0,5 J/mm² et 1,8 J/mm².

2. Procédé selon la revendication 1, **caractérisé en ce que** le rayon transporteur d'énergie est un rayon laser (7) ou un rayon électronique.

3. Procédé selon la revendication 1 ou 2, **caractérisé en ce que** la pièce de remplacement de dent (10) est une structure en pont ou une couronne intégrale de forme anatomique ou une dent intégrale de forme anatomique.

4. Procédé selon une des revendications 1 à 3, **caractérisé en ce que** la zone périphérique (14) a une largeur de 0,1 à 1 mm, de préférence 0,4 mm au maximum.

5. Procédé selon une des revendications 1 à 4, **caractérisé en ce que** la vitesse de constitution, à savoir le produit de l'épaisseur de la couche poudreuse, de la largeur de bande du rayon (7) et de la vitesse d'exposition, est plus élevée à l'intérieur (15) que dans la zone périphérique (14).

6. Procédé selon une des revendications 1 à 5, **caractérisé en ce que** l'apport énergétique du rayon (7) se situe entre 0,5 J/mm² et 8 J/mm².

7. Procédé selon une des revendications 1 à 6, **caractérisé en ce que** la résistance à la traction et à la flexion de la zone périphérique (14) est supérieure à 1,1 fois la résistance à la traction et à la flexion de l'intérieur (15).

8. Procédé selon une des revendications 1 à 7, **caractérisé en ce que** le matériau (6) est un métal.
